# EUROPEAN PATENT SPECIFICATION

(11) **EP 0 492 693 B1**
(45) Date of publication and mention of the grant of the patent: **25.08.1993**
(21) Application number: 91203233.1
(22) Date of filing: 11.12.1991
(51) Int. Cl.: B60S 1/08

(54) **Apparatus for controlling a vehicle window wiper system**
Steuereinrichtung für ein Fahrzeugscheibenwischersystem
Dispositif pour commander le système d'essuie-glace d'un véhicule

(30) Priority: 20.12.1990 US 633627
(43) Date of publication of application: 01.07.1992
(73) Proprietor: GENERAL MOTORS CORPORATION, Detroit Michigan 48202 (US)
(72) Inventor: Mueller, Donald Lee, Dayton, OH 45459 (US); Wright, Amanda Rose, Fairborn, OH 45324 (US); Monahan, Michael Bernard, Miamisburg, OH 45342 (US)
(74) Representative: Denton, Michael John

(56) References cited:
- EP-A- 0 403 337
- US-A- 4 916 374

## Description

This invention relates to apparatus for controlling a vehicle window wiper system capable of having minimal signal connections through a vehicle firewall from the operator control to the wiper motor.

It is desirable to minimize the signal connections as much as possible to reduce the wire and connectors needed for the vehicle wiring harness to reduce the cost and complexity of the vehicle wiring harness.

The present invention seeks to provide improved apparatus for controlling a vehicle window wiper system.

According to an aspect of the present invention, there is provided apparatus for controlling a vehicle window wiper system as specified in claim 1. The invention can reduce the cost and complexity of the vehicle wiring harness by combining control switch and rain sensor inputs on a single, two-channel time division multiplexed connection between a multiplex encoder on the passenger side of the firewall and a multiplex decoder on the engine side.

In a practical embodiment, there is provided a windshield wiper control system having a variable position control switch, a variable value rain sensor, and a wiper mechanism. This system includes a multiplex encoder located on the passenger side of the firewall, a multiplex decoder on the engine side, and a single conductor connected therebetween over which a multiplex control signal is applied from the encoder to the decoder. The multiplex encoder may include means for generating a multiplex control signal as a cyclical waveform containing cycles having different first and second periods. The duty cycle of the first period cycles is preferably determined by the value of the rain sensor, and the duty cycle of the second period cycles determined by the position of the control switch.

The multiplex decoder may include means for controlling the wiper mechanism in response to the respective duty cycles of the first and second period cycles. This can provide a two-channel time division multiplex operation which transmits the rain sensor and control switch inputs over a single conductor. The rain sensor input is preferably conveyed in one channel of the multiplex control signal and represented by the duty cycle of the first period cycles. The control switch position is then conveyed in the other channel of the multiplex control signal and represented by the duty cycle of the second period cycles.

According to another aspect of the present invention, there is provided apparatus for controlling a vehicle window wiper system as specified in claim 8.

According to another aspect of the present invention, there is provided a vehicle as specified in claim 10.

This invention can be advantageous in an automotive vehicle due to the possibility of having only one wire extending through the vehicle firewall from the multiplex encoder to the multiplex decoder. In addition, this invention can have the further advantage of reducing the number of connectors that are needed for the wiper motor.

An embodiment of the present invention is described below, by way of illustration only, with reference to the accompanying drawings, in which:
Figure 1 is a schematic and block diagram of an embodiment of vehicle window wiper system;
Figure 2 shows a waveform of a multiplexed signal generated by the system of Figure 1;
Figure 3 is a circuit diagram of a first embodiment of a multiplex encoder for use in producing the signal of Figure 2;
Figures 4a-4e show a series of timing diagrams helpful in understanding the operation of the circuit of Figure 3;
Figure 5 is a schematic diagram of a second embodiment of a multiplex encoder for use in producing the signal of Figure 2;
Figures 6(A)-6(E) are timing diagrams illustrating the operation of the embodiment of Figure 5;
Figures 7-10 show circuit diagrams of portions of the embodiment of Figure 5;
Figure 11 is a flow chart illustrating the demultiplexing of the signal shown in Figure 4E;
Figure 12 is a flow chart illustrating the demultiplexing of the signal shown in Figure 6E; and
Figure 13 is another embodiment of input connection for a rain sensor.

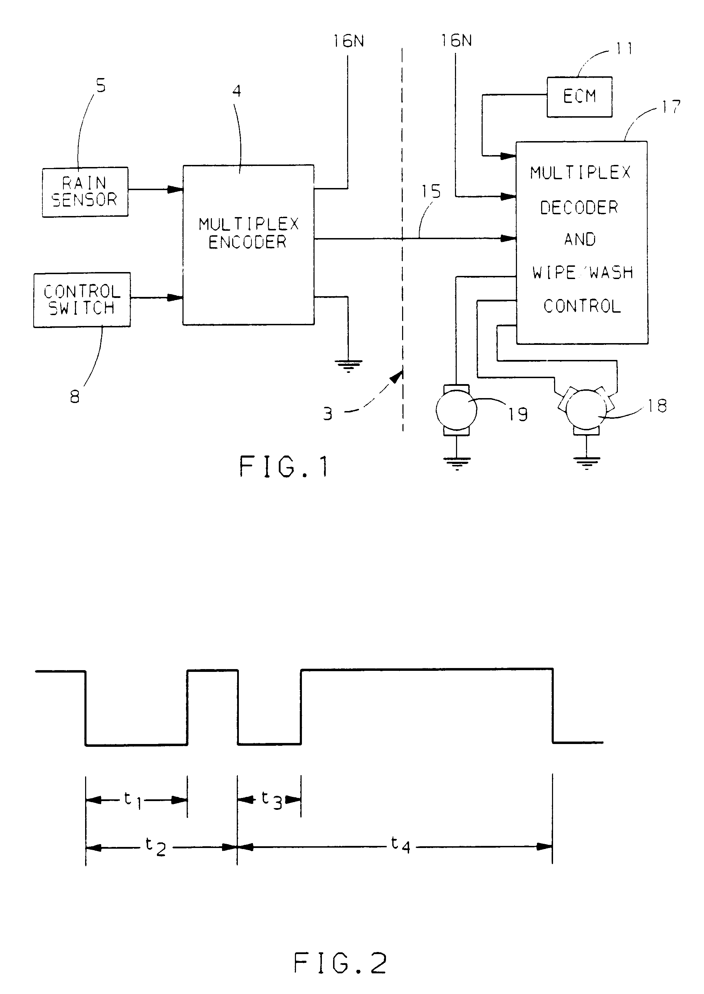

Figure 1 shows a windshield wiper system having a two-channel time division multiplex controller. The multiplex controller utilizes a multiplex encoder 4, which may be located on the passenger side of a vehicle firewall 3, to encode signals from a rain sensor 5 and a control switch 8 into the form of a single multiplex control signal. The multiplex control signal, as shown in Fig. 2, is a cyclical rectangular waveform having alternating first and second periods of durations t₂ and t₄, respectively. The periods of first duration t₂ form a first information channel while the periods of second duration t₄ form a second information channel; and the alternation of the first and second periods provides time division multiplexing. In each first period t₂, the waveform switches between low and high voltages at a time determined by rain sensor 5 to provide rain sensor information in a first channel duty cycle of ratio t₁/t₂. In each second period t₄, the waveform switches between low and high voltages at a time determined by control switch 8 to provide control switch information in a second channel duty cycle of ratio t₃/t₄. This multiplex control signal is transmitted over a single conductor 15 extending through firewall 3 to a multiplex decoder and wipe/wash controller 17 located on the engine side of firewall 3. Controller 17 provides multiplex decoding of the signal on conductor 15 for control of wipe motor 18 and wash motor 19 in response to the respective duty cycles of the first and second period cycles.

This embodiment is designed for a window wiper system with fully automatic capability. The wiper control switch 8, for example, in addition to an OFF position and optional manual selection positions for MIST (single wipe), LO speed continuous operation, HI speed continuous operation and WASH, may include one or more AUTO positions, in which wiper operation is controlled automatically in response to the rain sensor signal. This automatic control may include on-off wiper selection, continuous-intermittent wiper selection and/or pause time adjustment of intermittent operation. Several AUTO positions may be provided for operator control of system moisture sensitivity; but, since pause time is to be automatically controlled, there is no need for a third channel for separate pause time control information. Controller 17 may include one or more inputs from additional sensors or other controls such as engine control module (ECM) 11 which may further affect wiper operation. For example, a park/neutral input from the vehicle transmission or ECM 11 could be used to prevent automatic wiper operation when the vehicle transmission is in park or neutral. This would prevent inadvertent wiper operation when the vehicle is being washed or when the vehicle is parked with the engine running.

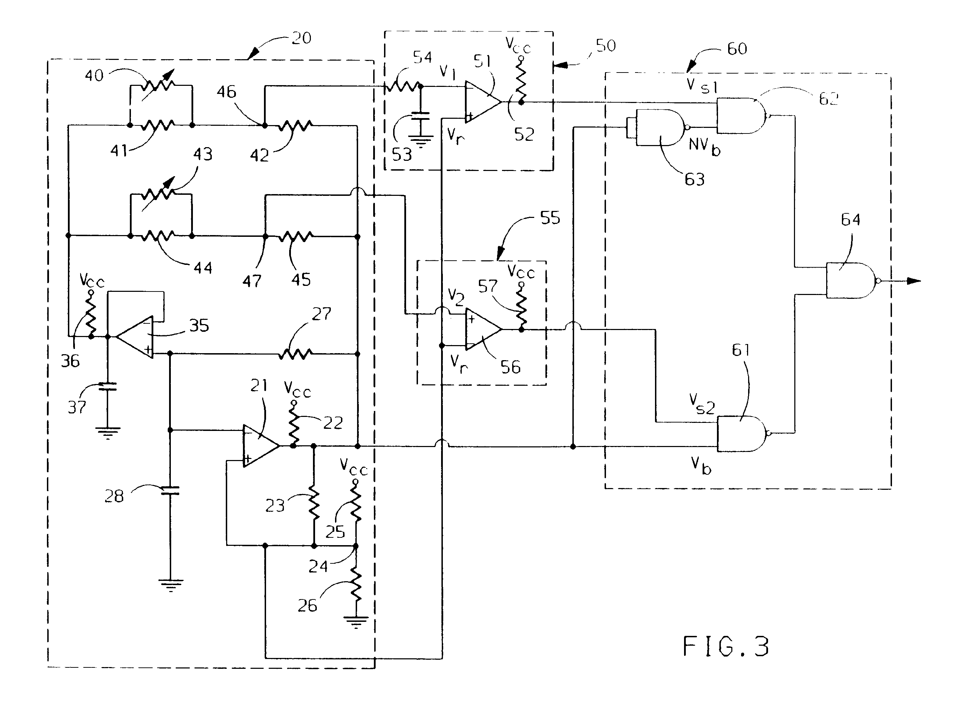

Figure 3 shows a circuit diagram of an embodiment of multiplex encoder 4, using discrete circuit elements. Multiplex encoder 4 comprises a base signal generator 20, a first slave signal generator 50, a second slave signal generator 55, and a logic circuit 60. Base signal generator 20 produces a base signal V_{b} having alternating first and second periods of different constant durations, which signal establishes the basic periods of the multiplex control signal. First slave signal generator 50 produces a signal Vₛ₁ keyed to base signal V_{b} but phase shifted therefrom to switch during the base signal's successive first periods. Likewise, second slave signal generator 55 produces a signal Vₛ₂ keyed to base signal V_{b} but phase shifted therefrom to switch during the base signal's successive second periods. Logic circuit 60 combines the base signal V_{b} and the first and second slave signals Vₛ₁, Vₛ₂ to generate the multiplex control signal. The phase shift of the first slave signal Vₛ₁ is responsive to rain sensor 5 to determine the duty cycle t₁/t₂ of the first period t₂ of the multiplex control signal. The phase shift of the second slave signal Vₛ₂ is responsive to control switch 8 to determine the duty cycle t₃/t₄ of the second period t₄ of the multiplex control signal.

In more detail, base signal generator 20 comprises an oscillator built around a comparator 21 with an output connected through a pull up resistor 22 (4.7K) to a positive DC supply voltage V_{cc} and through a positive feedback resistor 23 (100K) to its non-inverting input, which is also connected to the junction 24 of a voltage divider comprising resistors 25 (100K) and 26 (100K) connected across supply voltage V_{cc}. The output of comparator 21 is also connected through a negative feedback resistor 27 (10K) to its inverting input, which is further connected through a capacitor 28 (0.470 uF) to ground.

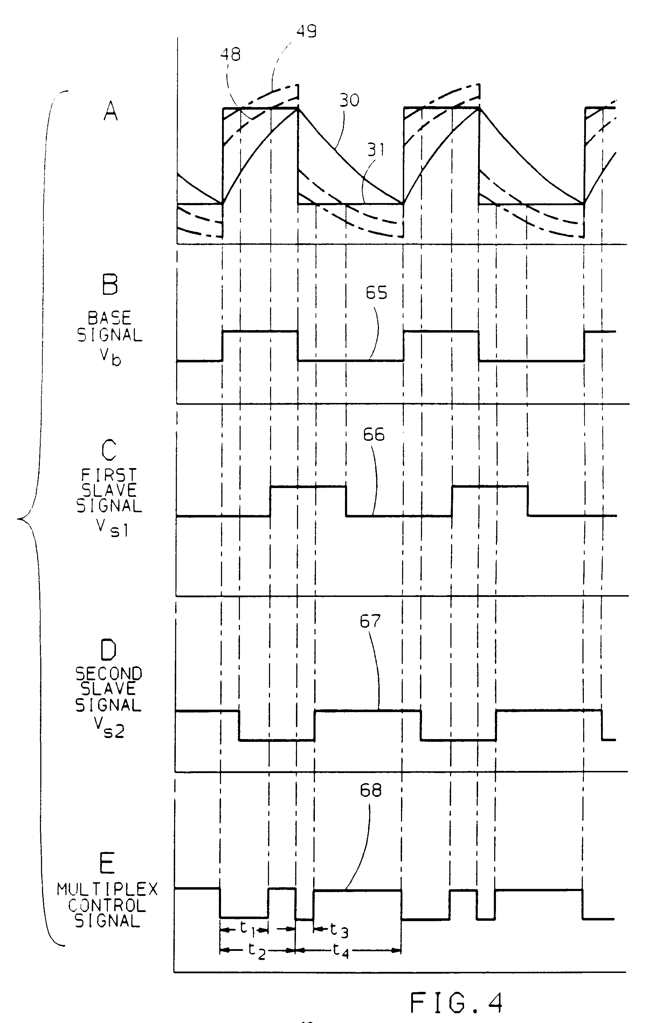

Comparator 21 and its associated passive components 22-28 form a standard relaxation oscillator which alternately charges capacitor 28 through resistors 22 and 27 and discharges capacitor 28 through resistor 27 and the output transistor of comparator 21. The resulting voltage waveforms can be seen in Figure 4(A).

Curve 30 of Figure 4(A), which is seen as a solid line comprising alternating ascending and descending exponential curves, shows voltage V_{c} across capacitor 28; and curve 31, seen as a solid rectangular wave, shows voltage Vᵣ applied to the non-inverting input of comparator 21. The output of comparator 21 comprises the base signal V_{b}, which is shown as curve 65 in Figure 4(B). Signal V_{b} has half cycles of longer and shorter duration due to the different charge and discharge rates of capacitor 28; and these half cycles of differing duration provide the first and second channels of the multiplex control signal, in a manner to be described.

In order to generate the first and second slave signals Vₛ₁, Vₛ₂, additional elements are placed in the negative feedback loop of comparator 21 in parallel with resistor 27. A buffer 35 comprises a comparator with a non-inverting input connected to the inverting input of comparator 21 and an output connected to its inverting input in negative unity gain feedback and further connected through a resistor 36 (10K) to supply voltage V_{cc} and through a capacitor 37 (0.10 uF) to ground. Rain sensor 5 and control switch 8 are each represented by an equivalent variable resistance connected in series with a fixed resistor between the output of buffer 35 and the output of comparator 21. In particular, rain sensor 5, represented by a variable resistor 40 in parallel with a fixed resistor 41 (200K), is connected in series with a fixed resistor 42 (100K). Rain sensor 5 may be a resistive sensor, whereby variable resistance 40 may be one or more pairs of electrodes separated by gap(s) on a vehicle window and thus having a resistance which decreases when a gap is bridged by water. Variable resistance 40 may alternatively be the equivalent resistance of a resistive network including a water variable resistor.

However, any rain sensor may be adapted to the apparatus of this embodiment by providing interface circuitry converting the output of the rain sensor to a resistance varying therewith. Furthermore, rain sensor 5 may include processing elements in addition to sensing elements, the resistance of resistor 40 in such a case representing a wiper control signal derived from the amount of moisture based on a control algorithm (not shown or described herein) and encoded as a variable resistance for application to encoder 4.

Likewise, control switch 8, represented by a variable resistor 43 in parallel with a fixed resistor 44, is connected in series with a fixed resistor 45 (100K). Control switch 8 may comprise any suitable switched resistor network adapted to provide a variable resistor 43 having a resistance which varies with switch position.

Signal V₁ is a voltage derived from the junction 46 of resistors 40 and 42; and signal V₂ is the voltage at junction 47 of resistors 43 and 45. Voltages V₁ and V₂ are shown as curves 48 and 49 of Figure 4(A). Voltage V₁ is derived from the output of a voltage divider, one end of which is connected through buffer 35 to capacitor 28 and the other end of which is connected to the output of comparator 21, which switches between two predetermined constant voltages. Thus, voltage V₁, as seen in the dashed line curve 48, comprises a series of alternating ascending and descending exponential curves corresponding to, but vertically spaced from, the similar exponential curves of voltage V_{c}. Curve 30, showing the voltage across capacitor 28, is continuous; but curve 48, showing the voltage at junction 46, jumps vertically at each transition between ascending and descending exponential portions, so that the ascending portions of curve 48 are above the corresponding portions of curve 30 and the descending portions of curve 48 are below the corresponding portions of curve 30. The amount of vertical shift of curve 48 relative to curve 30 is a function of the resistance of variable resistor 43 and thus of the rain sensor 5.

The preceding is similarly true for the alternating dash/dot curve 49, which represents the voltage V₂ at junction 47 and which is shifted by an amount which is a function of control switch 8.

Signal Vᵣ and the voltage V₁ at junction 46 are fed to first slave signal generator 50 for the generation of the phase shifted first slave signal V_{S1}, shown as curve 66 in Figure 4(C). A comparator 51 has an output connected through a pull up resistor 52 (10K) to supply voltage V_{cc}, a non-inverting input connected to the non-inverting input of comparator 21 to receive voltage Vᵣ and an inverting input connected through a capacitor 53 to ground and through a resistor 54 (10K) to junction 46 so that voltage V₁ is fed thereto. Referring to Figure 4(A), curve 48 of voltage V₁ crosses curve 31 of voltage Vᵣ in each alternating high and low period of voltage Vᵣ at a point phase shifted from the point at which curve 30 of voltage V_{c} crosses curve 31 of voltage Vᵣ. Thus, the output first slave signal V_{S1} is phase shifted with respect to the base signal V_{b}.

Signals Vᵣ and V₂ are fed to second slave signal generator 55. A comparator 56 has an output connected through a pull up resistor 57 (10K) to supply voltage V_{cc}, an inverting input connected to the non-inverting input of comparator 21 to receive therefrom voltage Vᵣ and a non-inverting input connected to voltage V₂ at junction 47. The output of comparator 56 is the second slave signal Vₛ₂, shown as curve 67 of Figure 4(D), which is phase shifted with respect to V_{c}, similarly to first slave signal Vₛ₁ but inverted therefrom due to the reversed application of corresponding signals to the comparator inputs.

Base signal V_{b} and the slave signals Vₛ₁ and Vₛ₂ are fed to logic apparatus 60 to generate the multiplex control signal. Logic apparatus 60 comprises a NAND gate 61 receiving signals V_{b} and Vₛ₂ on its inputs and a NAND gate 62 receiving on its inputs signals Vₛ₁ and NV_{b}, the latter being an inverted signal V_{b} produced by an inverter 63 connected NAND gate 62. The outputs of NAND gates 61 and 62 are fed to a NAND gate 64, the output of which is the multiplex control signal, shown as curve 68 of Figure 4(E).

The relationships are shown in the additional curves 65-68 of Figures 4(B)-4(E), respectively. Curve 65 of Figure 4(B) is the base signal V_{b}, which is the output of the oscillator comprising comparator 21 and its associated components. It comprises alternating different periods of high and low voltage. Curve 66 of Figure 4(C) is the first slave signal Vₛ₁, which is phase shifted with respect to V_{b}. Curve 67 of Figure 4(D) is the second slave signal Vₛ₂, which is phase shifted and inverted with respect to V_{b}. Logic apparatus 60 ensures that the multiplex control signal changes state in response to each state change of base signal V_{b} but changes state in response to Vₛ₁ only during the high voltage (first channel) periods of V_{b} and in response to VS2 only during the low voltage (second channel) periods of V_{b}. The result is a time division multiplexed two-channel signal with information in each channel contained in the duty cycle thereof. Figure 4(E) identifies the periods t₁-t₄ of the multiplex control signal corresponding to those shown in Figure 2.

Controller 17 includes elements for the decoding of the multiplex control signal on line 15. These elements may include a digital processor adapted to generate an interrupt with each voltage change of the multiplex control signal and a stored program having an interrupt routine including a DEMULTIPLEX portion for identifying the first and second channels of the signal and obtaining the information therein and storing it in a suitable memory.

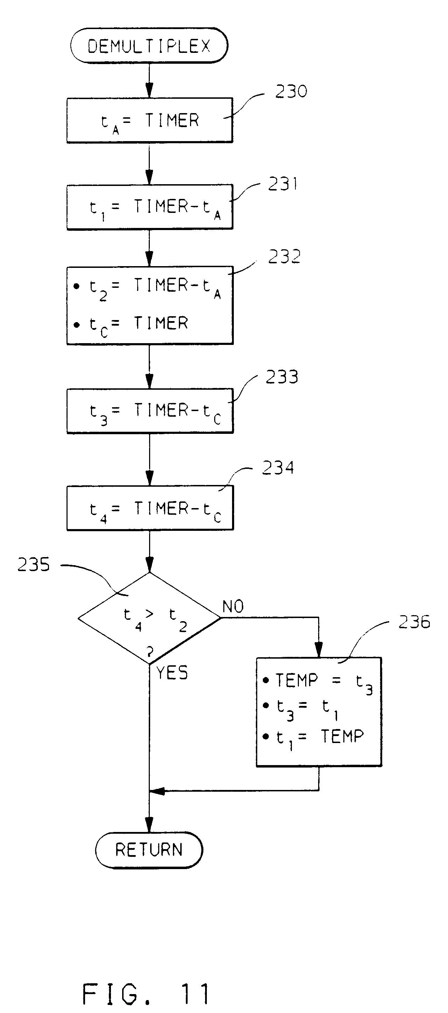

The operation of controller 17 in this respect is shown in the flow chart of Figure 11. In considering this flow chart, it is to be understood that with each interrupt controller 17 identifies whether the voltage change producing the interrupt is a rising or falling edge of the waveform.

The DEMULTIPLEX flow chart of Figure 11 begins with an interrupt on a sensed falling edge (step 230), in which the contents of a free running timer is stored as an intermediate variable t_{A}. At the next interrupt, on a rising edge (step 231), t_{A} is subtracted from the new timer contents and the difference is stored as t₁. At the next interrupt, on a falling edge (step 232), the new timer contents are subtracted from t_{A}, the difference is stored as t₂, and the new timer contents are stored as intermediate variable t_{c}. At the next interrupt, on a rising edge (step 233), t_{c} is subtracted from the new timer contents and the difference is stored as t₃. At the next interrupt, on a falling edge, t_{c} is subtracted from the new timer contents and the difference is stored as t₄. At this point, time durations for t₁-t₄ are stored for both channels of the multiplex control signal. However, the durations may be assigned to the wrong channels. To determine whether this is the case, t₄ is compared with t₂ at decision block 234. If t₄ is greater, the channel assumption was correct; and the routine may be exited with the correct values of t₁ and t₃ stored for use in controlling wiper motor 18 and washer motor 19. If t₄ is not greater than t₂, however, the channel assumption was not correct; and the contents of t₁ and t₃ must be exchanged. This is done in step 236, using a temporary memory location TEMP, before the routine is exited.

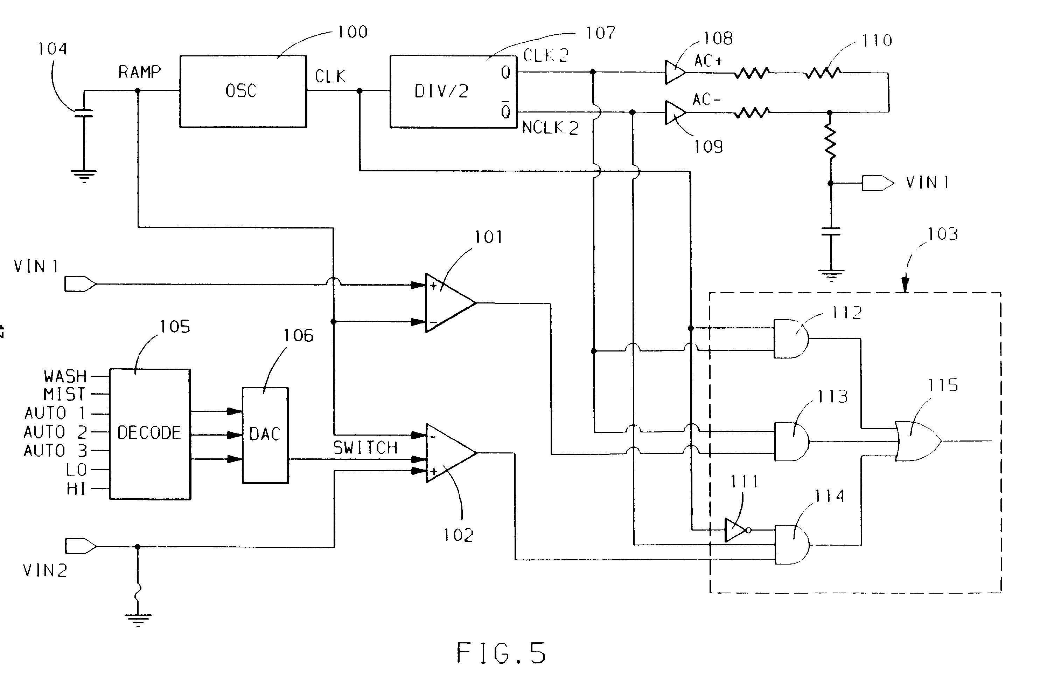

Figure 5 shows the basic layout of another embodiment of multiplex encoder 4, which is in the form of a bipolar integrated circuit. The circuit includes a basic oscillator 100, a pair of slaved comparators 101 and 102, and an output logic circuit 103, similar to the embodiment of Figure 3.

The operation of this circuit is similar to that of the circuit of Figure 3 in that a RAMP signal from oscillator 100, which represents the voltage on a capacitor 104 being charged and discharged during operation of the oscillator 100, is fed to comparators 101 and 102 to be compared to inputs from rain sensor 5 and control switch 8 to generate outputs phase shifted from the oscillator output; and in that these outputs, together with output clock signals from the oscillator 100, are combined in output logic circuit 103 to produce the desired multiplexed signal. However, there are significant differences in the operation of the circuit and in how the multiplexed channels are formed.

The multiplex encoder of Figure 5 has a rain sensor input VIN1 to the non-inverting input of comparator 101. The multiplex encoder further has alternative analogue control switch inputs to the non-inverting input of comparator 102, one of which is analogue input VIN2 and the other of which is decoded and D/A converted from a plurality of digital switch inputs. Thus, the circuit allows either analogue or digital switch inputs from control switch 8. analogue input VIN2 may be grounded through a fuse to activate the alternative digital switch inputs but may be activated for analogue input by blowing the fuse and forcing all digital inputs to states producing the lowest output from digital-to-analogue converter 106.

Seven digital switch inputs are provided in this application and decoded in a decoder 105 into a three-bit digital word, which is fed to the digital-to-analogue converter (DAC) 106. There is an eighth position of the control switch corresponding to OFF; and this position corresponds to none of the digital inputs being selected. The output of DAC 106 thus provides a different analogue voltage level for each of the alternative control switch inputs to comparator 102. Comparator 102 is designed to compare the higher of its analogue input voltages (VIN2 or the output of DAC 106) with the oscillator RAMP signal. As shown, the input from VIN2 is grounded so that the input from DAC 106 will be compared to the oscillator RAMP signal in comparator 102. Likewise, comparator 101 compares its input signal VIN1 with the oscillator RAMP signal.

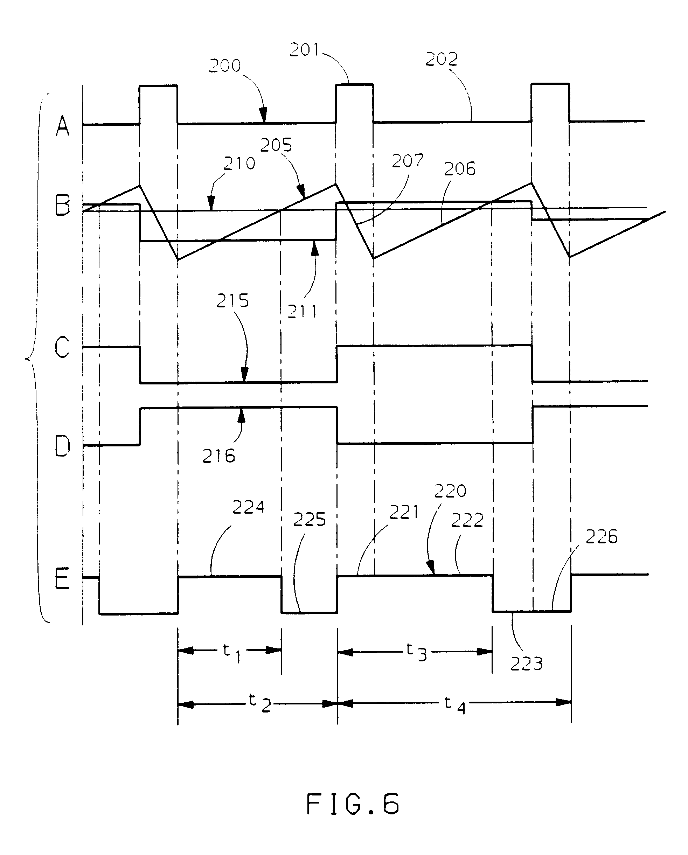

Oscillator 100 produces the RAMP signal with a constant frequency having a rising ramp or charge time five times the falling ramp or discharge time, as seen in curve 205 of Figure 6(B). However, unlike the embodiment of Figure 3, the rising and falling ramp times do not directly provide two channels having periods differing by a factor of five. Rather, the two channels are created in alternating rising (longer) ramp times; and the multiplexed output signal is forced alternately high and low during successive falling (shorter) ramp times to add pairs of these times to alternate longer ramp times and thus create the alternating different time periods for first and second channel identification. The RAMP signal is fed to the inverting inputs of comparators 101 and 102.

Oscillator 100 further provides a rectangular CLK signal which is low during the longer rising portion of the RAMP signal and high during the shorter falling portion of the RAMP signal, as shown in curve 200 of Figure 6(A). The CLK signal thus indicates the rising/falling status of the RAMP signal. In addition, the CLK signal is divided in a divide-by-two (DIV/2) circuit 107 to form opposing square waves CLK2 and NCLK2 with half periods equal to the total period of the CLK signal. These opposing square waves are fed through buffer amplifiers 108 and 109 to form a signal across pads AC- and AC+ to drive the rain sensor resistor 110 with an alternating current and thus ensure that the rain sensor sees an average voltage of zero to prevent electrical polarization of water on the vehicle windshield with a resistive rain sensor.

If the rain sensor 5 is such that its resistance in this circuit is not affected by such considerations, the AC switching of the voltage across resistor 110 may be eliminated from the circuit and resistor 110 may be supplied with fixed voltages rather than CLK2 and NCLK2. In any case, however, the opposing square waves CLK2 and NCLK2 are provided, along with the CLK signal and the outputs of comparators 101 and 102, to output logic circuit 103.

The generation of the multiplexed signal in output logic circuit 103 will be described with reference to Figure 5 and the waveforms of Figures 6(A)-6(F). The CLK output of oscillator 100 is shown as rectangular waveform 200 in Figure 6(A), which comprises shorter high voltage portions 201 alternating with longer (ratio 1:5 as previously described) low voltage portions 202. The RAMP voltage output of oscillator 100 is shown as waveform 205 of Figure 6(B), which comprises falling voltage portions 207, occurring during portions 201 of waveform 200, alternating with rising portions 206, occurring during portions 202 of waveform 200. Figure 6(B) also shows a waveform 210, which represents an assumed constant output from DAC 106 or VIN2, and a waveform 211, which represents the rain sensor input VIN1. Figures 6(C) and 6(D) show, respectively, waveforms 215 and 216, representing the CLK2 and NCLK2 outputs of DIV/2 circuit 107. Figure 6(E) shows the multiplex control signal 220, which is derived from the signals shown in Figures 6(A)-6(D) in the logic circuit 103.

Referring to Figure 5, logic circuit 103 includes AND gates 112-114, each of which has an output connected to an input of an OR gate 115. AND gate 112 receives the CLK signal from oscillator 100 and signal CLK2 from DIV/2 circuit 107 on its two inputs. Thus, AND gate 112 will provide a high output only when the CLK and CLK2 signals are both high. This produces high voltage portion 221 of waveform 220. AND gate 113 receives signal CLK2 from DIV/2 circuit 107 and the output of comparator 101 on its two inputs. AND gate 113 ensures that, when CLK2 is high, the multiplex control signal will remain high until the rising RAMP exceeds the rain sensor voltage VIN1. This produces high voltage portion 222 of waveform 220.

AND gate 114 has three inputs and receives signal NCLK2 from DIV/2 circuit 107, the output of comparator 102 and a signal NCLK derived by inverting signal CLK in an inverter 111. AND gate 114 thus ensures that, when CLK and CLK2 are both low, the multiplex control signal will remain high until the rising RAMP exceeds the DAC output or VIN2 input, whichever is activated, to provide a high voltage portion 224 of waveform 220.

Since the outputs of AND gates 112-114 are combined in OR gate 115, the output of the latter is low whenever the outputs of AND gates 112-114 are all low. This provides additional low voltage portions 223, 225 and 226 of waveform 220. Low voltage portion 223 occurs when CLK and the output of comparator 101 are both low and CLK2 is high. Low voltage portion 225 occurs when CLK, CLK2 and the output of comparator 102 are all low. Low voltage portion 226 occurs when CLK is high and CLK2 is low.

Portions 224 and 225 form the first channel of the multiplex control signal, with high voltage portion 224 forming time t₁ and low voltage portion 225 added to high voltage portion 224 forming time t₂. As voltage VIN2 or the DAC 106 output increases and decreases in response to control switch 8, the relative durations of portions 224 and 225 change to produce a phase shift and corresponding change in the duty cycle ratio t₁/t₂ of the first channel during the longer, rising RAMP portions of oscillator cycles when CLK2 is low.

Portions 222 and 223 are the corresponding portions for the second channel. However, in the second channel, portion 221 is added to portion 222 to provide time t₃; and portion 226 is added to portions 221, 222 and 223 to define time t₄. As voltage VIN1 increases and decreases in response to rain sensor 5, the relative durations of portions 221 plus 222 and portions 223 plus 226 change to produce a phase shift and corresponding change in the duty cycle ratio t₃/t₄ of the second channel during the longer, rising RAMP portions of oscillator cycles when CLK2 is high.

Thus, the different durations of the first and second channels in the multiplex signal are produced by adding the previous and following high CLK pulses to every second low CLK pulse from oscillator 100; and the alternate multiplex channels can thus be identified by their time durations. It will be noted that the longer duration channel is used for the rain sensor information. This provides an advantage in the case of a rain sensor having an inherent capacitance, since the added time duration gives the rain sensor signal more chance to settle. It should also be noted that the embodiment of Figure 5 will operate correctly even in the case of an open or shorted rain sensor.

It should be noted that the multiplex control signal 220 of Figure 6(E), produced by the embodiment of Figure 5 differs from that Figure 4, produced by the embodiment of Figure 3, in two respects. The first is the relative inversion of the first compared with the second: that is, each of the channels of waveform 220 in Figure 6(E) comprises a high voltage portion followed by a low voltage portion rather than a low voltage portion followed by a high voltage portion as in waveform 68 of Figure 4(E). The second is that time duration t₂ in waveform 220 of Figure 6(E) includes the added time of portion 221, which is added for channel identification.

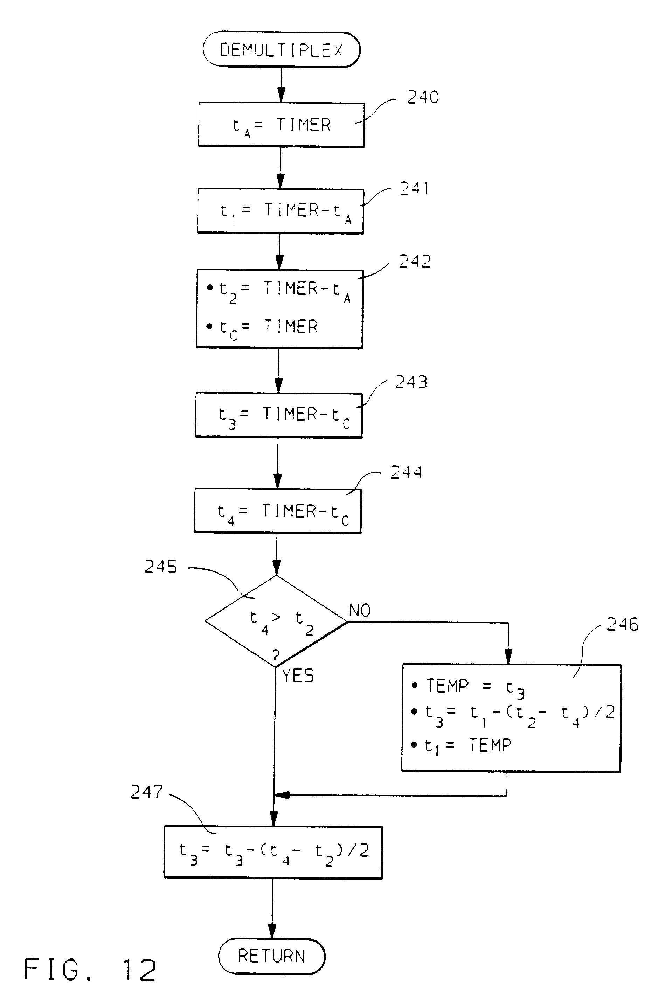

These differences are taken into account in a slightly revised DEMULTIPLEX routine for the embodiment of Figures 5 and 6 as shown in the flow chart of Figure 12. Steps 240-245 of Figure 12 are identical to steps 230-235 of Figure 11 except that the rising and falling edges are inverted. Thus, step 240 is produced by a rising edge of the waveform, step 241 by a falling edge, etc. In addition, step 246 and an added step 247 of Figure 12 delete the added duration of portion 221 from duration t₃ to recover the original information of the second multiplex channel. Otherwise, the demultiplexing of the signal shown in waveform 220 of Figure 6(E) is identical to that of the signal shown in waveform 68 of Figure 4(E).

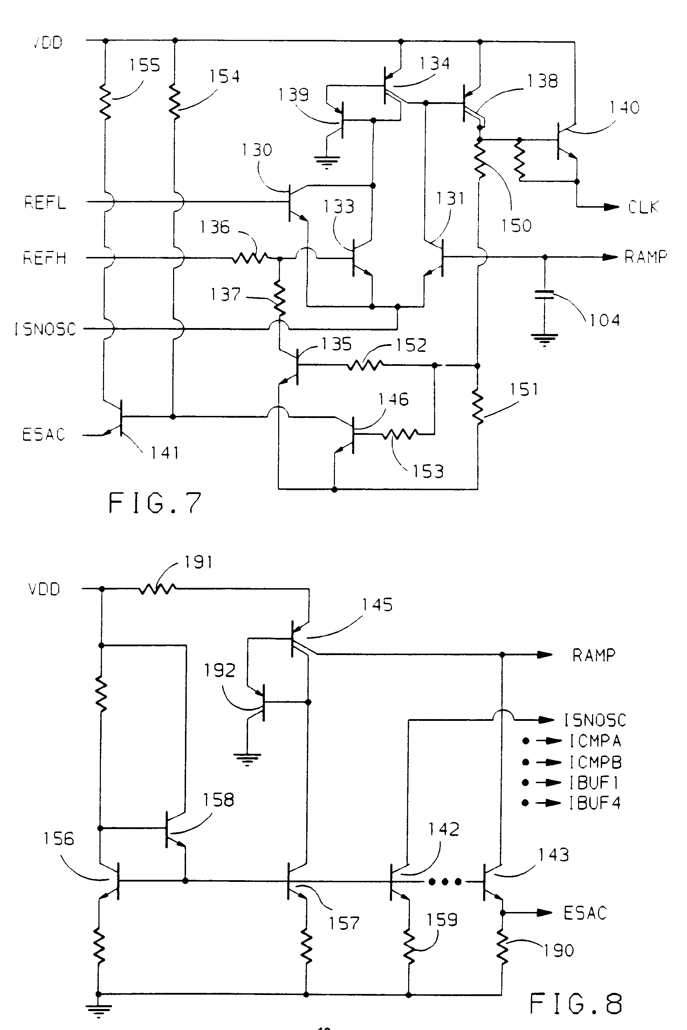

The circuit of oscillator 100 is shown in detail in Figures 7 and 8. Referring to Figure 7, a bipolar IC comparator has NPN input transistors 130 and 131 with emitters connected together to a current sink ISNOSC. The collectors of transistors 130 and 133 are connected to dual collectors of a PNP transistor 134 having an emitter tied to supply voltage VDD and a base connected to the emitter of a grounded collector PNP transistor 139, the base of which is connected to one of the collectors of transistor 134 and the collector of transistor 130. An NPN transistor 133 is connected in parallel with transistor 130 to form a second input on one side of the comparator. A PNP transistor 138 has an emitter connected to supply voltage VDD, a base connected to the collectors of transistors 131 and 134 and a pair of emitters both connected to the base of an NPN transistor 140 having a collector connected to supply voltage VDD and an emitter providing output CLK. The collector of transistor 138 is further connected through resistors 150 and 151 in series to ground. The junction of resistors 150 and 151 is connected through a resistor 152 to the base of a grounded emitter NPN transistor 135 having a collector connected through a resistor 137 to the base of transistor 133 and is also connected through a resistor 153 to the base of a grounded emitter NPN transistor 146 having a collector connected to the base of an NPN transistor 141 and through a resistor 154 to VDD. Transistor 141 has a collector connected through a resistor 155 to VDD and an emitter providing a terminal ESAC.

The base of transistor 131 is connected through an external capacitor 104 to ground and through a RAMP terminal to the additional circuitry in Figure 8, to be described. The base of transistor 130 is provided with a constant base voltage of REFL (2.5 volts); and the base of transistor 133 is connected through a resistor 136 (5400 ohm) to a constant voltage REFH (5.0 volts) and through a resistor 137 (4500 ohm) to the collector of transistor 135. Thus, when transistor 135 is conducting, the base of transistor 133 is held lower than the base of transistor 130, which is at 2.5 volts. As will be seen, this is the case when capacitor 104 is discharging; and capacitor 104 will discharge until its voltage reaches the 2.5 volts on the base of transistor 130. When transistor 135 is not conducting, however, the base of transistor 133 is at a higher voltage (substantially 5 volts) than the base of transistor 130. This occurs while capacitor 104 is charging; and it can thus charge up to 5 volts. Transistor 135 is controlled by the output state of the comparator through transistors 138 and 135. Transistor 138 also controls transistor 140 to generate the CLK signal and transistors 146 and 141 to control a charge/discharge current circuit of Figure 8 through terminal ESAC.

Figure 8 shows a current sink generator which uses a current mirror comprising transistors 156, 157 and 158 to provide a plurality of constant current sinks (not all shown) for various circuits in the system, one of which is transistor 142, which has an emitter grounded through a resistor 159, a base connected to the base of transistor 156 and emitter of transistor 158 and which sinks a constant current of ISNOSC into its collector from the comparator of Figure 7. Similar transistors, not shown, have bases connected to the base of transistor 142 and emitters grounded through resistors to provide similar current sinks on their collectors. These transistors are not specifically shown in Figure 8; but their collectors are indicated by the labels of their current sinks: ICMPA, ICMPB, IBUF1-IBUF4 (providing current sinks for comparators 101, 102 and buffers 108, 109). In addition, an NPN transistor 143 has a base connected to the base of transistor 142 and an emitter connected through a resistor 190 to ground and providing a terminal ESAC connected to terminal ESAC of Figure 7. The collector of transistor 143 is further connected to the ramp terminal, which is connected to the RAMP terminal of Figure 7 and to a collector of a dual collector PNP transistor 145 having its other collector connected to the collector of transistor 157, its emitter connected through a resistor 191 to VDD and its base connected to the emitter of a PNP transistor 192 with a grounded emitter and a base connected to the collector of transistor 157.

Transistor 143 is turned on and off with transistor 141 of Figure 7 and sinks a constant current of 6I when it is turned on. Transistor 145 provides a constant current of I to the RAMP terminal, from which capacitor 104 is connected to ground. Thus, when transistor 143 is turned on, it sinks the current I from transistor 145 and additionally draws a discharge current of 5I from capacitor 104, since its total current must be 6I. When transistor 143 is turned off, however, the current I from transistor 145 is provided to charge capacitor 104. The charge current of capacitor 104 is thus only one fifth the discharge current; and this accounts for the charge time of the oscillator being five times the discharge time.

In operation, the voltage on capacitor 104 varies between 2.5 and 5 volts. Capacitor 104 is discharging when transistor 143 is turned on. This occurs when transistor 138 is on, which turns on transistors 135 and 146. Transistor 146 turns off transistor 141 to allow transistor 143 to turn on and sink the discharge current. Transistor 140 is turned on to provide a high CLK signal, as indicated in Figure 6b. In addition, transistor 135 pulls the voltage on the base of transistor 133 below 2.5 volts. This allows capacitor 104 to continue to discharge until the voltage on the base of transistor 131 falls slightly below the 2.5 volts on the base of transistor 130, at which point transistor 130 turns on to turn off transistors 131, 138, 140, 135 and 146. The output CLK signal goes low as transistor 140 turns off; the capacitor is forced to charge by the circuit of Figure 8 as transistor 141 turns on to turn off transistor 143; and transistor 133 is provided with a base voltage of 5 volts as transistor 135 turns off so as to allow capacitor 104 to charge up to 5 volts, at which time transistor 131 turns on again to repeat the cycle.

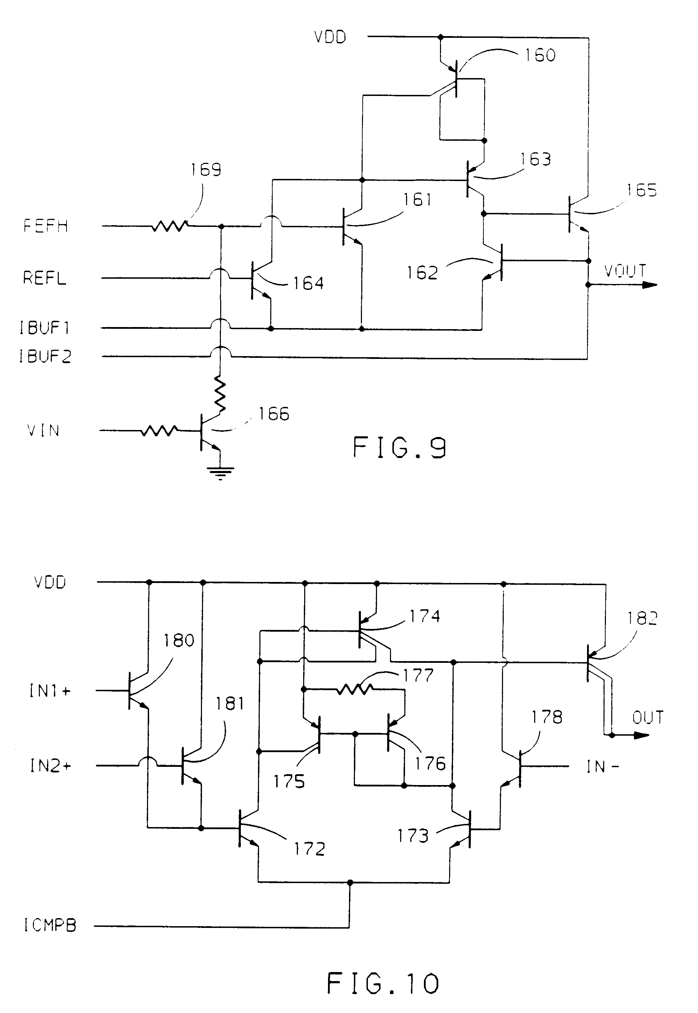

A circuit useful for buffer 108 is shown in Figure 9. A PNP transistor 160 has an emitter provided with supply voltage VDD and a pair of collectors: one connected back to its base and the other connected to the collectors of NPN transistors 161 and 164 having emitters both connected to current sink IBUF1. The base of transistor 160 is connected to the emitter of a PNP transistor 163 having a base connected to the collectors of transistors 161 and 164 and further having a collector connected to the collector of an NPN transistor 162 with an emitter connected to IBUF1 and a base connected to current sink IBUF2 and an output terminal VOUT. The base of transistor 161 is connected through a resistor 169 to the 5.0 volt reference REFH; and the base of transistor 164 is connected to the 2.5 volt reference REFL. An NPN output transistor 165 has a collector connected to supply voltage VDD, a base connected to the collector of transistor 163 and an emitter providing output terminal VOUT connected to the base of transistor 162 and also to current sink IBUF1. Finally, an NPN input transistor 166 has a collector connected through a resistor 167 to the base of transistor 161, a grounded emitter and a base provided with the input voltage CLK2 through a resistor 168.

In operation, parallel transistors 161 and 164 on the left are balanced against transistor 162 on the right, with the left side transistor (161 or 164) having the lower base voltage being effectively removed from the circuit. The input CLK2 to the buffer circuit of Figure 9 may be at a high (VDD) or low (ground) level. If input CLK2 is low, transistor 166 is turned off, and transistor 161, having 5.0 volts applied to its base, turns on to turn off transistor 162 and turn on output transistor 165 for a high output voltage on terminal VOUT. On the other hand, when input voltage CLK2 is high, transistor 166 is turned on to ground the base of transistor 161 and effectively remove it from the circuit. Transistor 164, having only 2.5 volts applied to its base, turns off as transistor 162 turns on. The collector of transistor 162 pulls down the base of transistor 165 to turn it off. Thus, the output voltage on terminal VOUT switches between high and low voltages simultaneously with, but buffered from, the input voltage CLK2. A similar circuit may be used for buffer 109, with input CLK2 replaced with NCLK2 and IBUF1, IBUF2 replaced with IBUF3, IBUF4.

The circuit of comparator 102 is shown in Figure 10. A pair of NPN transistors 172 and 173 have emitters connected to current sink ICMPB and collectors connected to first and second collectors of a PNP transistor 174 having an emitter connected to supply voltage VDD and a base connected to the collector of transistor 172 and thus to one of its own collectors. A PNP transistor 175 has a collector connected to the collector of transistor 172, an emitter connected to supply voltage VDD, and a base connected to the base of a PNP transistor 176 having a collector connected to its base and to the collector of transistor 173. The emitter of transistor 176 is connected through a resistor 177 to the emitter of transistor 175. Transistors 175 and 176 provide a small hysteresis for the circuit. An inverting input IN- is provided to comparator 102 through the base of an NPN transistor 178 having an emitter connected to the base of transistor 173 and a collector connected to supply voltage VDD. Non-inverting inputs IN1+ and IN2+ are provided through the bases of NPN transistors 180 and 181, respectively, each having an emitter connected to the base of transistor 172 and a collector connected to supply voltage VDD. An output PNP transistor 182 has an emitter connected to supply voltage VDD, a base connected to the collector of transistor 173 and a pair of collectors tied together to provide an output terminal.

In operation, the higher of inputs IN1+ and IN2+ is compared with input IN-. If either of the non-inverting inputs exceeds the inverting input, transistor 172 turns on hard and transistor 173 turns off. Transistor 182 therefore turns off for an open collector output, which is pulled low by a transistor in the following logic circuit. If the inverting input exceeds both non-inverting inputs, transistor 173 turns on hard to turn on transistor 182 and provide a high output. The same circuit can be used for comparator 101; however, one of the transistors 180 and 181 is not needed, since comparator 101 has only one non-inverting input. In addition, current sink ICMPA replaces ICMPB.

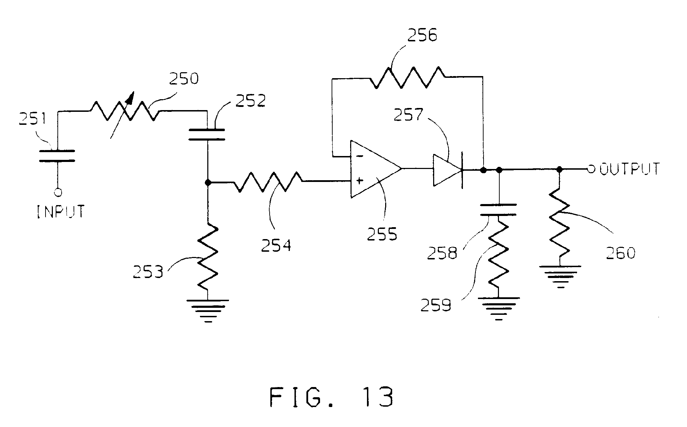

An alternative input connection for rain sensor 5 is shown in Figure 13. This connection is used in cases where a resistive rain sensor is capacitively coupled through the window glass to the electrical circuit, such as is shown in U.S. Patent No.4,827,198. The rain sensor resistance 250 resides on the outer surface of the window glass and has one end coupled to an INPUT terminal through a capacitance 251 between a first pair of electrodes on the outer and inner glass surfaces. Capacitance 252, which represents the capacitance between a second pair of electrodes on the outer and inner glass surfaces, connects the other end of resistor 250 through a fixed resistor 253 to ground. The junction of capacitance 252 and resistor 253 is connected through a resistor 254 to the non-inverting input of an op-amp 255 having an output connected in negative feedback through a resistor 256 to its inverting input. The output of op-amp 255 is further connected through a forward diode 257 to an OUTPUT terminal, the cathode of the diode being connected to ground through a capacitor 258 and resistor 259 in series and through a resistor 260.

An AC signal of a specific frequency is applied to the INPUT terminal. When this signal goes positive, it will charge capacitor 258, the voltage on which follows the rising signal. When the signal goes negative, capacitor 258 will discharge through resistor 260 with a specified time constant. This time constant may be adjusted so that the OUTPUT terminal will briefly hold a peak voltage for sampling. This peak voltage will vary with the resistance of rain sensor resistor 250. This output voltage may be provided to input terminal VIN1 of Figure 5 for application to the non-inverting input of comparator 101.

## Claims

1. Apparatus for controlling a vehicle window wiper system, which system includes a control switch, a rain sensor and a wiper mechanism including a motor; the apparatus comprising a multiplex encoder (14) and a multiplex decoder (17) connected to one another by means of a conductor (15), the multiplex encoder (14) including generating means (20, 50, 55, 60) for generating a multiplex control signal which comprises a cyclical waveform containing alternating first and second periods (t₂, t₄) of different durations and in which the duty cycle of the first periods (t₂) is a function of the state of the rain sensor and the duty cycle of the second periods (t₄) is a function of the state of the control switch, the multiplex decoder (17) including decoding means for decoding the multiplex control signal and control means for controlling the wiper mechanism on the basis of the duty cycles of the first and the second periods.

2. Apparatus according to claim 1, wherein the generating means comprises a base signal generator (20) for generating a base signal having alternate first and second periods (t₂, t₄) of different duration, first and second slave signal generators (50, 55) controlled by the base signal generator and adapted to generate first and second slave signals (t₁, t₃) having the alternate first and second periods of the base signal and shifted in phase with respect to the base signal by amounts determined by the state of the rain sensor and the position of the control switch respectively, and a combiner (60) adapted to combine the base signal and the first and second slave signals to generate the multiplex control signal.

3. Apparatus according to claim 1 or 2, wherein for a window wiper system in which the rain sensor comprises a resistor on the outer surface of the vehicle window having a resistance adapted to vary with amount of rain on the vehicle window, the apparatus comprises a voltage divider within which the rain sensor is adapted to be incorporated; and sensing means responsive in use to the voltage at an output terminal of the voltage divider to determine the duty cycle of the first periods.

4. Apparatus according to claim 3, wherein the apparatus is adapted to couple the rain sensor capacitively through at least a portion of the vehicle window.

5. Apparatus according to claim 1, wherein the generating means comprises an oscillator (100) for generating an oscillating signal having alternating long and short periods (201, 202); modulating means for modulating the long periods (202) alternately with the rain sensor and control switch; and a combiner (103) adapted to combine the short periods (201) alternately with the preceding and following long periods (202) of the oscillating signal, whereby one of the first and second periods (t₂, t₄) includes a long period (222, 223) combined with the preceding and following short periods (221, 226) and the other of the first and second periods (t₂, t₄) includes a long period (224, 225).

6. Apparatus according to claim 5, wherein the oscillator (100) is adapted to generate a ramp signal (205) during each long period of the oscillating signal; the modulating means comprises a first step signal generator (101) adapted to generate a first step signal (222 to 223) when the ramp signal (205) equals a rain sensor reference state and a second step signal generator (102) adapted to generate a second step signal (224 to 225) when the ramp signal (205) equals a control switch reference state; and the combiner (103) is adapted to generate from the first and second step signals and the signals from the oscillator a multiplex control signal in which alternating first and second step signals of a first polarity are seperated by a third step signal (225 to 221) of a second polarity opposite to the first polarity, the third step signals occurring alternately at the beginning and end of corresponding short periods.

7. Apparatus according to claim 6, wherein the third step signals (225 to 221) following the second step signals (224 to 225) occur at the beginning of corresponding short periods (221) in such a manner that first periods (t₄) occurring between successive third step signals (225 to 221) with an intermediate first step signal (222 to 223) are longer than second periods (t₂) occurring between successive third step signals with an intermediate second step signal (224 to 225).

8. Apparatus for controlling a vehicle window wiper system, which system includes a control switch, a resistive rain sensor mounted on an external surface of a vehicle window and a wiper mechanism including a motor controlled at least in part in response to a rain sensor signal and in part in response to another wiper signal; the apparatus comprising, a timer (107) adapted to provide periods of substantially equal time duration during which the rain sensor is alternately monitored and not monitored; a voltage source (108, 109, 110) effective to provide a DC voltage across the rain sensor of a first polarity during periods in which the rain sensor is monitored and of an opposite polarity during periods in which the rain sensor is not monitored; and generating means (100, 101, 102) adapted to generate a rain sensor signal in response to the resistance of the rain sensor during periods in which the rain sensor is monitored and generating another wiper signal during periods in which the rain sensor is not monitored.

9. Apparatus according to claim 8, comprising an oscillator (100) adapted to generate an oscillating signal of alternating long and short periods; the timer (107) being effective to generate the periods of substantially equal time duration with each full cycle of the oscillating signal; the generating means being adapted to generate a rain sensor signal during long periods of the oscillating signal and when the DC voltage across the rain sensor is of the first polarity, and to generate the other wiper signal during the long periods of the oscillating signal and when the DC voltage across the rain sensor is of the opposite polarity.

10. A vehicle comprising a firewall (3) separating a passenger compartment from an engine compartment, on the passenger side of the firewall a variable position control switch (8) and a variable value rain sensor (5), and a wiper mechanism including a motor (18) located on the engine side of the firewall; and apparatus according to any preceding claim, the multiplex encoder being located on the passenger side of the firewall and the multiplex decoder being located on the engine side of the firewall.

## Patentansprüche

1. Vorrichtung zum Steuern eines Fahrzeugs-Windschutzscheiben-Wischersystems, welches System enthält einen Steuerschalter, einen Regensensor und einen Wischer-Mechanismus, der einen Motor enthält; wobei die Vorrichtung umfaßt einen Multiplex-Kodierer (14) und einen Multiplex-Dekodierer (17), die miteinander mittels eines Leiters (15) verbunden sind, und der Multiplex-Kodierer (14) Erzeugermittel (20, 50, 5, 60) enthält zum Erzeugen eines Multiplex-Steuersignals, welches umfaßt eine zyklische Wellenform, die abwechselnde erste und zweite Zeiträume (t₂, t₄) unterschiedlicher Längen enthält und bei der der Einschaltzyklus der ersten Zeiträume (t₂) eine Funktion des Status des Regensensors und der Einschaltzyklus der zweiten Zeiträume (t₄) eine Funktion des Status des Steuerschalters ist, der Multiplex-Dekodierer (17) Dekodiermittel zum Dekodieren des Multiplex-Steuersignals und Steuermittel zum Steuern des Wischer-Mechanismus aufgrund der Einschaltzyklen der ersten und der zweiten Zeiträume enthält.

2. Vorrichtung nach Anspruch 1, bei der das Erzeugermittel umfaßt einen Grundsignal-Erzeuger (20) zum Erzeugen eines Grundsignals mit abwechselnden ersten und zweiten Zeiträumen (t₂, t₄) unterschiedlicher Dauer, erste und zweite Hilfssignal-Erzeuger (50, 55), die durch den Grundsignal-Erzeuger gesteuert und zum Erzeugen von ersten und zweiten Hilfssignalen (t₁, t₃) ausgelegt sind, welche die abwechselnden ersten und zweiten Zeiträume von dem Grundsignal besitzen und bezüglich des Grundsignals um Größen phasenverschoben sind, die durch den Zustand des Regensensors bzw. die Position des Steuerschalters bestimmt sind, und einen Kombinator (60), der ausgelegt ist, das Grundsignal und die ersten und zweiten Hilfssignale zu kombinieren, um das Multiplex-Steuersignal zu erzeugen.

3. Vorrichtung nach Anspruch oder 2, bei der für ein Windschutzscheiben-Wischersystem, in welchem der Regensensor einen Widerstand an der Außenfläche des Fahrzeugfensters umfaßt mit einem Widerstandswert, der dazu ausgelegt ist, sich mit der Menge von Regen an dem Fahrzeugfenster zu verändern, die Vorrichtung umfaßt einen Spannungsteiler, in welchem der Regensensor aufgenommen zu werden ausgelegt ist; und Sensormittel, die im Gebrauch auf die Spannung an einer Ausgangsklemme des Spannungsteilers ansprechen, um den Einschaltzyklus der ersten Zeiträume zu bestimmen.

4. Vorrichtung nach Anspruch 3, bei der die Vorrichtung ausgelegt ist, den Regensensor kapazitiv durch mindestens einen Abschnitt des Fahrzeugfensters zu koppeln.

5. Vorrichtung nach Anspruch 1, bei der das Erzeugermittel umfaßt einen Oszillator (100) zum Erzeugen eines oszillierenden Signals mit abwechselnd langen und kurzen Zeiträumen (201, 202); Modulationsmittel zum Modulieren der langen Zeiträume (202) abwechselnd mit dem Regensensor und dem Steuerschalter; und einen Kombinator (103), der ausgelegt ist, die kurzen Zeiträume (201) abwechselnd mit den vorangehenden und den nachfolgenden langen Zeiträumen (202) des oszillierenden Signals zu kombinieren, wodurch einer der ersten bzw. zweiten Zeiträume (t₂, t₄) einen langen Zeitraum (222, 223) enthält, kombiniert mit den vorangehenden und nachfolgenden kurzen Zeiträumen (221, 226) und der andere der ersten bzw. zweiten Zeiträume (t₂, t₄) einen langen Zeitraum (224, 225) enthält.

6. Vorrichtung nach Anspruch 5, bei der der Oszillator (100) ausgelegt ist, ein gleichmäßig ansteigendes Signal (205) während jedes langen Zeitraums des oszillierenden Signals zu erzeugen; das Modulationsmittel umfaßt einen ersten Schrittsignal-Generator (101), der ausgelegt ist, ein erstes Schrittsignal (222 auf 223) zu erzeugen, wenn das gleichmäßig ansteigende Signal (205) einem Regensensor-Referenzzustand entspricht und einen zweiten Schrittsignal-Generator (102), der ausgelegt ist, ein zweites Schrittsi<nal (224 auf 225) zu erzeugen, wenn das gleichmäßig ansteigende Signal (205) einem Steuerschalter-Referenzzustand gleich ist; und der Kombinator (103) ausgelegt ist, aus dem ersten und dem zweiten Schrittsignal und den Signalen von dem Oszillator ein Multiplex-Steuersignal zu erzeugen, bei dem abwechselnde erste und zweite Schrittsignale einer ersten Polarität getrennt sind durch ein drittes Schrittsignal (225 auf 221) einer zweiten Polarität entgegengesetzt zur ersten Polarität, wobei die dritten Schrittsignale abwechselnd am Beginn und Ende der entsprechenden kurzen Zeiträume auftreten.

7. Vorrichtung nach Anspruch 6, bei der die dritten Schrittsignale (225 auf 221) nach den zweiten Schrittsignalen (224 auf 225) am Beginn der entsprechenden kurzen Zeiträume (221) in solcher Weise auftreten, daß die ersten Zeiträume (t₄), die zwischen aufeinanderfolgenden dritten Schrittsignalen (225 auf 221) mit einem zwischenliegenden ersten Schrittsignal (222 auf 223) auftreten, länger sind, als zweite Zeiträume (t₂), die zwischen aufeinander folgenden dritten Schrittsignalen mit einem zwischenliegenden zweiten Schrittsignal (224 zu 225) auftreten.

8. Vorrichtung zum Steuern eines Fahrzeugfenster-Wischersystems, welches System enthält einen Steuerschalter, einen an einer Außenfläche eines Fahrzeugfensters angebrachten Widerstands-Regenfühler und einen Wischer-Mechanismus, der einen Motor enthält, der wenigstens teilweise in Reaktion auf ein Regensensor-Signal gesteuert wird und teilweise in Reaktion auf ein anderes Wischersignal; wobei die Vorrichtung umfaßt einen Zeitgeber (107), der ausgelegt ist, Zeiträume von im wesentlichen gleicher Zeitlänge zu schaffen, in denen der Regensensor abwechseld überwacht und nicht überwacht wird; eine Spannungsquelle (108, 109, 110), die wirksam ist, eine Gleichspannung über den Regensensor von einer ersten Polarität während Zeiträumen zu schaffen, in der der Regensensor überwacht wird und von einer entgegengesetzten Polarität während Zeiträumen, in denen der Regensensor nicht überwacht wird; und Erzeugermittel (100, 101, 102), das ausgelegt ist, ein Regensensor-Signal in Reaktion auf den Widerstandswert des Regensensors zu schaffen während Zeiträumen, in denen der Regensensor überwacht wird und ein anderes Wischer-Signal zu schaffen während Zeiträumen, in denen der Regensensor nicht überwacht wird.

9. Vorrichtugn nach Anspruch 8 mit einem Oszillator (100), der ausgelegt ist, ein oszillierendes Signal mit abwechselnden langen und kurzen Zeiträumen zu erzeugen, wobei der Zeitgeber (107) wirksam ist, die Zeiträume von im wesentlichen gleicher Zeitlänge mit jedem vollen Zyklus des oszillierenden Signals zu schaffen; das Erzeugermittel ausgelegt ist, ein Regensensor-Signal während langer Zeiträume des oszillierenden Signals zu schaffen und wenn die Gleichspannung über dem Regensensor von einer ersten Polarität ist, und das andere Wischer-Signal während der langen Zeiträume des oszillierenden Signals zu schaffen, und wenn die Gleichspannung über dem Regensensor von entgegengesetzter Polarität ist.

10. Fahrzeug, welches umfaßt eine Spritzwand (3), die einen Fahrgastraum von einem Motorraum abtrennt, an der Fahrgastseite der Spritzwand einen Steuerschalter (8) mit variabler Position und einen Regensensor (5) von variablem Wert und einen Wischer-Mechanismus, der einen an der Motorseite der Spritzwand angebrachten Elektromotor enthält, und eine Vorrichtung nach einem der vorangehenden Ansprüche, wobei der Multiplex-Kodierer an der Fahrgastseite der Spritzwand angebracht ist und der Multiplex-Dekodierer an der Motorseite der Spritzwand.

## Revendications

1. Dispositif pour commander un mécanisme d'essuie-glace de véhicule, lequel mécanisme comporte un interrupteur de commande, un détecteur de pluie et un mécanisme d'essuie-glace comportant un moteur, le dispositif comportant un codeur multiplex (14) et un décodeur multiplex (17) connectés l'un à l'autre par l'intermédiaire d'un conducteur (15), le codeur multiplex (14) comportant des moyens générateurs (20, 50, 55, 60) pour engendrer un signal de commande multiplex qui comporte une forme d'onde cyclique contenant des première et seconde périodes alternées (t₂, t₄) de durées différentes et dans lequel le facteur de forme des premières périodes (t₂) est une fonction de l'état du détecteur de pluie et le facteur de forme des secondes périodes (t₄) est une fonction de l'état de l'interrupteur de commande, le décodeur multiplex (17) comportant des moyens de décodage pour décoder le signal de commande multiplex et des moyens de commande pour commander le mécanisme d'essuie-glace sur la base des facteurs de forme des première et seconde périodes.

2. Dispositif selon la revendication 1, dans lequel les moyens générateurs comportent un générateur (20) de signal de base pour engendrer un signal de base ayant des première et seconde périodes alternées (t₂, t₄) de durées différentes, des générateurs (50, 55) de premier et second signaux esclaves commandés par le générateur de signal de base et adaptés pour engendrer des premier et second signaux esclaves (t₁, t₃) ayant les première et seconde périodes alternées du signal de base et décalés en phase par rapport au signal de base par l'intermédiaire de quantités déterminées par l'état du détecteur de pluie et la position de l'interrupteur de commande respectivement, et un mélangeur (60) adapté pour mélanger le signal de base et les premier et second signaux esclaves pour engendrer le signal de commande multiplex.

3. Dispositif selon la revendication 1 ou 2, dans lequel pour un mécanisme d'essuie-glace dans lequel le détecteur de pluie comporte une résistance située sur la surface extérieure de la vitre du véhicule ayant une résistance adaptée pour varier avec la quantité de pluie tombant sur la vitre du véhicule, le dispositif comporte un diviseur le tension, le détecteur de pluie étant adapté pour y être incorporé, et des moyens de détection sensibles en utilisation à la tension existant au niveau d'une borne de sortie du diviseur de tension pour déterminer le facteur de forme des premières périodes.

4. Dispositif selon la revendication 3, dans lequel le dispositif est adapté pour coupler de manière capacitive le détecteur de pluie à travers au moins une partie de la vitre du véhicule.

5. Dispositif selon la revendication 1, dans lequel les moyens générateurs comportent un oscillateur (100) pour engendrer un signal oscillant ayant des périodes alternées longues et courtes (201, 202), des moyens modulateurs pour moduler les périodes longues (202) de manière alternée avec le détecteur de pluie et l'interrupteur de commande, et un mélangeur (103) adapté pour mélanger les périodes courtes (201) de manière alternée avec les périodes longues (202) précédentes et suivantes du signal oscillant, de telle sorte que l'une des première et seconde périodes (t₂, t₄) comporte une période longue (222, 223) mélangée aux périodes courtes (221, 222) précédentes et suivantes et l'autre de la première et de la seconde périodes (t₂, t₄) comporte une période longue (224, 225).

6. Dispositif selon la revendication 5, dans lequel l'oscillateur (100) est adapté pour engendrer un signal en dents de scie (205) pendant chaque période longue du signal oscillant, les moyens modulateurs comportent un générateur (101) de signal de première étape adapté pour engendrer un premier signal (222 à 223) d'étape lorsque le signal en dents de scie (205) est égal à un état de référence du détecteur de pluie et un générateur (102) de second signal d'étape adapté pour engendrer un second signal d'étape (224 à 225) lorsque le signal en dents de scie (205) correspond à un état de référence de l'interrupteur de commande, et le mélangeur (103) est adapté pour engendrer à partir des premier et second signaux d'étape et des signaux provenant de l'oscillateur un signal de commande multiplex dans lequel des premier et second signaux d'étape alternés d'une première polarité sont séparés par un troisième signal d'étape (225 à 221) d'une seconde polarité opposée à la première polarité, les troisièmes signaux d'étape apparaissant alternativement au début et à la fin des périodes courtes correspondantes.

7. Dispositif selon la revendication 6, dans lequel les troisièmes signaux d'étapes (225 à 221) suivant les seconds signaux d'étape (224 à 225) apparaissent au début des périodes courtes correspondantes (221) de manière telle que les premières périodes (t₄) apparaissant entre des troisièmes signaux d'étape successifs (225 à 221) ayant un premier signal d'étape intermédiaire (222 à 223) sont plus longues que les secondes périodes (t₂) apparaissant entre des troisièmes signaux d'étape successifs ayant un second signal d'étape intermédiaire (224 à 225).

8. Dispositif de commande d'un mécanisme formant essuie-glace de véhicule, lequel mécanisme comporte un interrupteur de commande, un détecteur de pluie résistif monté sur une surface extérieure d'une vitre de véhicule et un mécanisme d'essuie-glace comportant un moteur commandé au moins en partie en réponse à un signal de détecteur de pluie et en partie en réponse à un autre signal d'essuie-glace, le dispositif comportant une minuterie (107) adaptée pour fournir des périodes de durées à peu près égales pendant lesquelles le détecteur de pluie est alternativement contrôlé et non contrôlé, une source de tension (108, 109, 110) efficace pour fournir une tension de courant continu à travers le détecteur de pluie et ayant une première polarité pendant les périodes au cours desquelles le détecteur de pluie est contrôlé et une polarité opposée pendant les périodes au cours desquelles le détecteur de pluie n'est pas contrôlé, et des moyens générateurs (100, 101, 102) adaptés pour engendrer un signal de détecteur de pluie en réponse à la résistance du détecteur de pluie pendant des périodes pendant lesquelles le détecteur de pluie est contrôlé et engendrer un autre signal d'essuie-glace pendant des périodes au cours desquelles le détecteur de pluie n'est pas contrôlé.

9. Dispositif selon la revendication 8, comportant un oscillateur (100) adapté pour engendrer un signal oscillant de périodes alternées longues et courtes, la minuterie (107) étant efficace pour engendrer les périodes de durées à peu près égales avec chaque cycle complet du signal oscillant, les moyens générateurs étant adaptés pour engendrer un signal de détecteur de pluie pendant les périodes longues du signal oscillant et lorsque la tension de courant continu à travers le détecteur de pluie a la première période polarité, et pour engendrer l'autre signal d'essuie-glace pendant les périodes longues du signal oscillant et lorsque la tension de courant continu à travers le détecteur de pluie a la polarité opposée.

10. Véhicule comportant une paroi pare-feu (3) séparant un compartiment passager d'un compartiment moteur, sur le côté passager de la paroi pare-feu, un interrupteur de commande (8) à position variable et un détecteur de pluie (5) à valeur variable, et un mécanisme d'essuie-glace comportant un moteur (18) situé sur le côté moteur de la paroi pare-feu, et un dispositif selon l'une quelconque des revendications précédentes, le codeur multiplex étant situé du côté passager de la paroi pare-feu et le décodeur multiplex étant situé sur le côté moteur de la paroi pare-feu.
